# EUROPÄISCHE PATENTSCHRIFT

(11) **EP 2 575 578 B1**
(45) Veröffentlichungstag und Bekanntmachung des Hinweises auf die Patenterteilung: **12.07.2023**
(21) Anmeldenummer: 11719525.5
(22) Anmeldetag: 10.05.2011
(51) Int. Cl.: A47J 43/06, A47J 43/07, A45C 3/00, A45C 5/08, A45C 13/02, A45C 13/10

(54) **KÜCHENGERÄT MIT AUFBEWAHRUNGSEINRICHTUNG**
KITCHEN APPLIANCE HAVING A STORAGE DEVICE
APPAREIL DE CUISINE MUNI D'UN DISPOSITIF DE RANGEMENT

(30) Priorität: 28.05.2010 DE 102010021916
(43) Veröffentlichungstag der Anmeldung: 10.04.2013
(73) Patentinhaber: BSH Hausgeräte GmbH, 81739 München (DE)
(72) Erfinder: KRÜGER, Tobias, 80634 München (DE); WICHERT, Karline, 81379 München (DE)
(86) Internationale Anmeldenummer: PCT/EP2011/057485
(87) Internationale Veröffentlichungsnummer: WO 2011/147673

(56) Entgegenhaltungen:
- WO-A1-02/28245
- CH-A- 284 328
- DE-T2- 69 715 892
- JP-A- 56 072 822
- Elizabeth Passarella: "Tip: Store Your Standing Mixer Attachments in the Bowl | Kitchn", , 21 April 2009 (2009-04-21), XP055600028, Retrieved from the Internet: URL:https://www.thekitchn.com/tip-store-yo ur-standing-mixer-82567 [retrieved on 2019-06-27]
- Faith Durand ET AL: "Better Ways to Store Fixed Stem Food Processor Blades? | Kitchn", , 4 January 2010 (2010-01-04), XP055598700, Retrieved from the Internet: URL:https://www.thekitchn.com/good-questio ns-44-104836 [retrieved on 2019-06-24]

## Beschreibung

### Hintergrund der Erfindung

Die vorliegende Erfindung betrifft ein elektromotorisches Küchengerät, insbesondere eine Küchenmaschine, mit wenigstens einer Ankoppelstelle für eine Vielzahl an Werkzeugen zum Verarbeiten von Nahrungsmitteln.

### Stand der Technik

Küchenmaschine bzw. Universalküchenmaschinen sind üblicherweise elektrische Küchengeräte, die bekanntermaßen zum Kneten, Rühren, Raspeln, Pürieren oder Entsaften eingesetzt werden. Diese Geräte bestehen aus einer Grundeinheit mit einer Rühr- oder Auffangschüssel und verschiedenen Anbauteilen, beispielsweise Zerkleinerer, Mixaufsatz, Getreidemühle oder Saftpresse sowie verschiedenen Einsätzen bzw. Verarbeitungswerkzeuge (Schneid- und Raspelscheibe, Knethaken, Schlag- und **Rührbesen**). **Um diese oben genannten Funktionen auszuüben, weisen** Küchenmaschinen eine Vielzahl an Bearbeitungswerkzeuge auf. Die Verarbeitungs- bzw. Bearbeitungswerkzeuge können scheiben-, trommel- oder kegelförmig sein. Einige Geräte erlauben das Aufstecken einzelner Knethaken oder Schneebesen. Rühr- oder Auffangschüsseln sind im Gerät integriert oder können abgenommen werden; teilweise sind eigene Werkzeuge fest eingebaut. Manche Zusatzgeräte sind komplette Einheiten (Fleischwolf, Saftpresse), die nur den Antrieb der Maschine nutzen. Die Drehzahl bei elektrischen Geräten kann meistens in mehreren Stufen reguliert werden oder ist stufenlos regelbar. Zum Anschließen der Bearbeitungswerkzeuge weisen Küchenmaschinen wenigstens eine Schnittstelle bzw. Ankoppelstelle auf, die eingerichtet ist, um Werkzeuge mit dem elektrischen Antrieb zu verbinden.

Üblicherweise werden die Werkzeuge des Küchengerätes getrennt aufbewahrt oder das Gerät weist eine Schublade bzw. ein im Gehäuse angeordneten Aufnahmeraum auf.

Die Schubladen beinhalten üblicherweise scharfe Werkzeuge wie Zerkleinerungsmesser, Reib- Raspeleinsätze etc.

Auch bekannt ist, dass Zubehörteile des Küchengeräts in einem Gehäuse untergebracht werden können, welches von einem Deckel verschlossen ist. Der Deckel wird mit Hilfe von Scharnieren an das Gehäuse angebracht, so dass ein Benutzer Zugang zu den Zubehörteilen haben kann. Solch eine Vorrichtung wird in der US 4 733 827 offenbart. Die DE 600 08 405 T2 zeigt einen Halter zum Aufbewahren von Zubehörteilen eines Haushaltsgeräts. Der Halter ist als Körper ausgebildet, auf welchem das Haushaltsgerät angeordnet wird. DE 697 15 892 T2 offenbart hierfür ein spezielles Werkzeugträgerteil. In CH 284 328 A wird vorgeschlagen, die Werkzeuge direkt in der Schüssel zu lagern. WO 02/28245 A1 offenbart einen in die Schüssel einzusetzenden, rigiden Aufbewahrungsbehälter. Auch JP 56 072822A zeigt einen einzusetzenden, rigiden Behälter.

Auf der Webseite mit dem Titel "Tip: Store Your Standing Mixer Attachments in the Bowl | Kitchn" (https://www.thekitchn.com/tip-store-your-standing-mixer-82567) wird vorgeschlagen, Werkzeuge eines Küchengeräts in dessen Schüssel in einem Küchentuch aufzubewahren.

Die bekannten Lösungen bringen jedoch unterschiedliche Nachteile mit sich. So kann beispielsweise die Schublade beim häufigen Gebrauch Defekte aufweisen bzw. zerstört werden, welches das Beschaffen eines neuen Küchengeräts mit sich bringt. Ferner erfordert die Herstellung solcher Küchengeräte eine hohe Anzahl an Produktionsschritten, welches sich ebenso als unwirtschaftlich erweisen kann.

### Der Erfindung zugrundeliegende Aufgabe

Der Erfindung liegt die Aufgabe zugrunde, ein gegenüber dem Stand der Technik verbessertes Küchengerät bereitzustellen, welches ein flexibles und verschleißarmes Aufbewahren von Verarbeitungswerkzeugen des Küchengeräts aufweist.

### Erfindungsgemäße Lösung

Die Lösung der gestellten Aufgabe gelingt durch ein Küchengerät mit den Merkmalen des Anspruchs 1. Es wird ein elektromotorisches Küchengerät, insbesondere Küchenmaschine, mit wenigstens einer Ankoppelstelle für eine Vielzahl an Werkzeugen zum Verarbeiten von Nahrungsmitteln bereitgestellt. Das Küchengerät weist eine aus einem flexiblen Material hergestellte Aufbewahrungseinrichtung für die Vielzahl an Werkzeugen auf. **Die Verwendung eines flexiblen Materials für die** Aufbewahrungseinrichtung erlaubt eine einfache Handhabung für einen Benutzer, da die Aufbewahrungseinrichtung verhältnismäßig leicht und einfach zu reinigen ist. Durch das flexible Material können unterschiedliche Werkzeuge zur Aufbewahrung verwendet werden, da die Aufbewahrungseinrichtung sich flexibel an die Außenform der Werkzeuge anpassen kann. Falls die Aufbewahrungseinrichtung keine oder eine geringe Anzahl an Werkzeugen trägt, kann diese leicht zusammengepresst oder zusammengefaltet werden, das ebenfalls zu einer platzsparenden Lagerung der Aufbewahrungseinrichtung als solche führt.

### Ausgestaltung der Erfindung

Vorteilhafte Aus- und Weiterbildungen, welche einzeln oder in Kombination miteinander eingesetzt werden können, sind Gegenstand der abhängigen Ansprüche.

Das flexible Material ist ein Textilmaterial. Textilmaterialien können leicht verarbeitet werden, und bieten zusätzlich eine ausreichende Festigkeit im Einsatz für eine Aufbewahrungseinrichtung gemäß der vorliegenden Erfindung.

Es ist vorgesehen, dass das Küchengerät eine Verarbeitungsschüssel zur Aufnahme von zu verarbeitenden Nahrungsmitteln umfasst, wobei die Aufbewahrungseinrichtung dergestalt ausgebildet ist, dass diese in der Verarbeitungsschüssel lagerbar ist. Folglich kann eine platzsparende Lagerung der Aufbewahrungseinrichtung in der Verarbeitungsschüssel gewährleistet werden. Durch das verwendete flexible Material für die Aufbewahrungseinrichtung kann einem Zerkratzen der Schüssel durch die meistens scharfkantigen Werkzeuge vorgebeugt werden.

Erfindungsgemäß bevorzugt weist die Aufbewahrungseinrichtung eine Zylinderform mit einer runden, insbesondere kreisrunden, Grundfläche und einer Mantelfläche auf. Die Zylinderform ist leicht herstellbar und ferner lässt sich die Aufbewahrungseinrichtung leicht zusammenpressen oder zusammenfalten, welches zu einer platzsparenden Lagerung führen kann. Weiter haben Verarbeitungsschüsseln meistens eine zylinderähnliche Form, und folglich kann die Aufbewahrungseinrichtung einfach innerhalb der Verarbeitungsschüssel gelagert werden.

Gemäß einer Ausführungsform der vorliegenden Erfindung ist eine Höhe der Mantelfläche kleiner oder gleich einer Schüsselhöhe der Verarbeitungsschüssel. Dies weist den Vorteil auf, dass die Aufbewahrungseinrichtung vollständig in der Schüssel gelagert werden kann. Falls die Verarbeitungsschüssel weiter einen Deckel aufweist, kann dieser auch dann aufgesetzt werden, wenn die Aufbewahrungseinrichtung innerhalb der Schüssel angeordnet ist. Somit kann das Werkzeug immer platzsparend in der Schüssel gelagert **bzw. aufbewahrt werden, oder falls das Werkzeug im Einsatz ist kann die** Aufbewahrungseinrichtung als solche in der Verarbeitungsschüssel gelagert werden.

Zweckmäßigerweise entspricht die Grundfläche im Wesentlichen einer Bodenfläche der Verarbeitungsschüssel. Dadurch kann die Aufbewahrungseinrichtung vollständig in die Verarbeitungsschüssel eingebracht werden.

Erfindungsgemäß weist die Aufbewahrungseinrichtung wenigstens einen verschließbaren Aufnahmeraum für Werkzeuge auf. Falls beispielsweise mehrere Aufnahmeräume **verwirklicht werden, können diese beispielsweise unterschiedliche** Bearbeitungswerkzeuge aufnehmen.

Zweckmäßigerweise und erfindungsgemäß ist der wenigstens eine Aufnahmeraum durch einen Reißverschluss verschließbar.

Es ist bevorzugt, dass das die Aufbewahrungseinrichtung ein Tragemittel aufweist. Das Tragemittel verbessert die Handhabung der Aufbewahrungseinrichtung, insbesondere falls diese alle Werkzeuge enthält und daher verhältnismäßig schwer sein kann.

Die vorliegende Erfindung eignet sich insbesondere für Küchenmaschine, die eine Vielzahl an Ankoppelstellen für Verarbeitungswerkzeug bzw. Werkzeug aufweisen. Die **Verarbeitungswerkzeuge können platzsparend und verletzungssicher in der** Aufbewahrungseinrichtung gelagert werden, welche wiederum wegen des flexiblen Herstellungsmaterials ebenfalls leicht handhabbar und verstaubar d.h. lagerbar ist.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

### Es zeigen:

- Fig. 1: ein elektromotorisches Küchengerät;
- Fig. 2: eine Verarbeitungsschüssel des Küchengeräts mit einer Aufbewahrungseinrichtung;
- Fig. 3: eine Draufsicht auf die Aufbewahrungseinrichtung;
- Fig. 4: eine Seitenansicht auf die Aufbewahrungseinrichtung;
- Fig. 5: eine Aufbewahrungseinrichtung des Küchengeräts mit Werkzeugen; und schließlich
- Fig. 6.: eine verschlossene Aufbewahrungseinrichtung gemäß der Erfindung

### Ausführliche Beschreibung der Figuren

Bei der nachfolgenden Beschreibung bevorzugter Ausgestaltungen der vorliegenden Erfindung bezeichnen gleiche Bezugszeichen gleiche oder vergleichbare Komponenten.

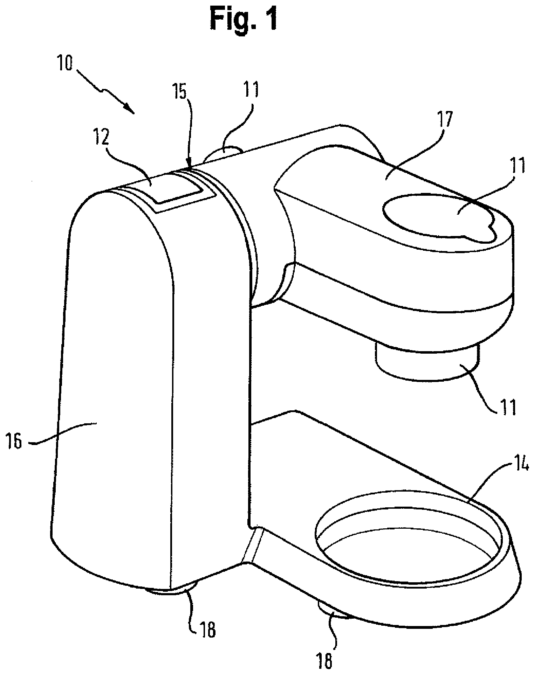

Fig. 1 zeigt ein Küchengerät, insbesondere elektromotorisches Küchengerät 10, vorzugsweise elektromotorische Solo- oder Universalküchenmaschine gemäß der vorliegenden Erfindung. Das Küchengerät 1 weist im Wesentlichen einen L-förmigen Aufbau mit einem Sockelteil 14 auf welchem eine Schüssel 13 zum Aufnehmen von Nahrungsmitteln anbringbar ist. Das Küchengerät 10 umfasst einen Grundkörper 16 und einen Schwenkarm 17. Gemäß dieser Ausführungsform der vorliegenden Erfindung weist der Schwenkarm 17 eine Vielzahl an Ankoppelstellen 11 für Verarbeitungswerkzeug 22. Als Verarbeitungswerkzeuge 22 können insbesondere Pürier-, Misch-, Häcksel-, Knet- und/oder Schneidwerke, Schlag- bzw. Rührbesen, Getränkemixer, Durchlaufschnitzler, Getreidemühlen, Zitrus- bzw. Fruchtpressen und/oder Fleischwolf, gemeint sein. In Abhängigkeit von der Schwenkarmposition können einzelne Ankoppelstellen 11 betrieben werden, wobei üblicherweise der Antriebsmotor des elektrischen Küchengeräts 10 im Grundkörper 16 **angeordnet ist und sein Drehmoment über geeignete** Getriebeeinrichtungen an die einzelnen Ankoppelstellen 11 übertragen wird. So wird die Ankoppelstelle 11 im unteren Bereich, mit Bezug auf Fig. 1, des Schwenkarms 17 beispielsweise zum Betrieb eines Rührwerkzeugs 22 zum Verarbeiten von Teig verwendet. Die seitlich am Schwenkarm 17 angeordnete Ankoppelstelle 11 kann zum **Anschließen eines Fleischwolfs verwendet werden,** wobei auch weitere Verarbeitungswerkzeuge 22 einsetzbar sind.

Der Schwenkarm 17 wirkt mit dem Grundkörper 16 des Küchengeräts 10 an einer Lagerstelle 15 zusammen. Die Lagerstelle 15 ist derart ausgebildet, dass der Schwenkarm unterschiedliche Betriebsstellungen bzw. Betriebspositionen einnehmen kann. Fig. 1 zeigt eine erste Betriebsstellung I auf, in welcher der Schwenkarm 11 horizontal fixiert ist, um beispielsweise Teig in einer am Sockelteil 14 angeordneten Rührschüssel 13 unterhalb der Ankoppelstelle 11 verarbeiten zu können.

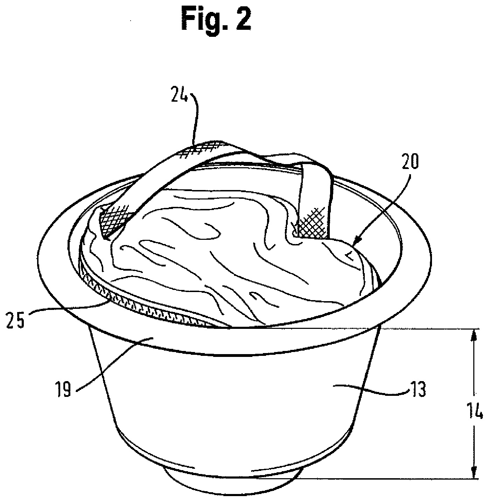

Fig. 2 zeigt eine Verarbeitungsschüssel 13, in welcher eine Aufbewahrungseinrichtung 20 gemäß der vorliegenden Erfindung gelagert bzw. angeordnet ist. Schematisch ist die Höhe der Schüssel 14 dargestellt, die vom Boden der Schüssel 13 bis zu ihrem oberen Rand 19 (umlaufender Schüsselrand 19) gekennzeichnet ist. Die Schüsselhöhe 14 stimmt im Wesentlichen mit der Höhe 21 der Aufbewahrungseinrichtung 20 überein, dergestalt, dass die Aufbewahrungseinrichtung 20 als solche vollständig in der Schüssel 13 aufbewahrt bzw. gelagert werden kann. Durch das flexible Material, insbesondere Textilmaterial oder Textilie, der Aufbewahrungseinrichtung 20 wird die Schüssel 13 nicht zerkratzt.

Ein Textilmaterial ist ein flexibles Material, das aus einem Verbund von Fasern besteht. Sowohl Fasern, Garn, textile Flächen wie Gewebe, Gewirke oder Gestricke und fertige Produkte (unter anderem Bekleidung oder Taschen) werden unter dem Oberbegriff Textilien oder Textilmaterialien zusammengefasst.

Die Aufbewahrungseinrichtung weist weiter ein Tragemittel 24 in Form einer Schlaufe auf, welche die Handhabung der Aufbewahrungseinrichtung 20 durch einen Benutzer verbessert.

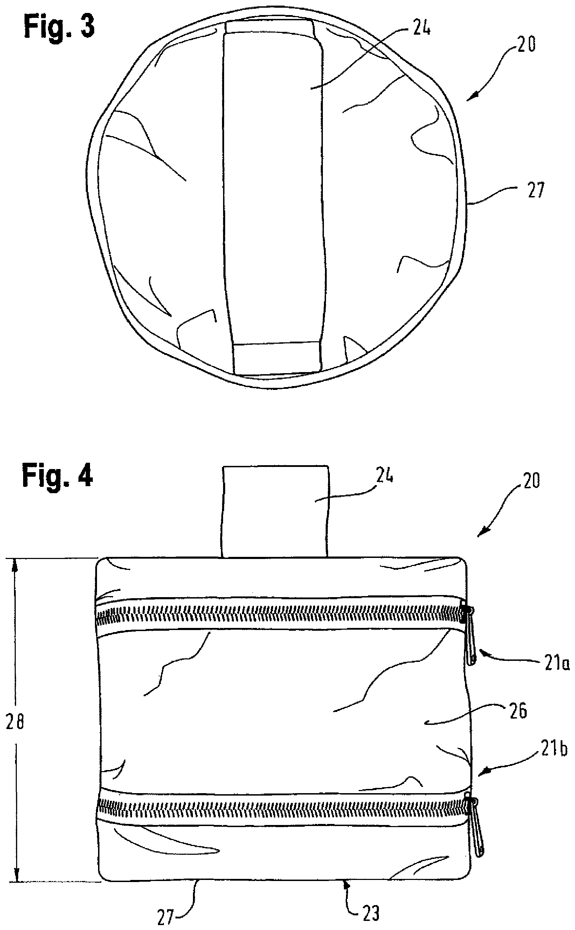

Fig. 3 zeigt eine schematische Draufsicht auf eine Aufbewahrungseinrichtung gemäß der vorliegenden Erfindung. Gemäß dieser Ausführungsform ist die Aufbewahrungseinrichtung 20 zylinderförmig mit einer kreisrunden Grundfläche 23. Durch die Zylinderform weist die Aufbewahrungseinrichtung 20 einen oberen und einen unteren umlaufenden Rand 27, der eine verstärkte Kante des flexiblen Materials bzw. Textilmaterials bildet. Der Rand 27 sichert einen stabilen Aufbau der Aufbewahrungseinrichtung 20 und ist durch eine Naht oder durch einen Klebevorgang bereitgestellt. Durch diesen verstärkten umlaufenden Rand 27 weist die Aufbewahrungseinrichtung 20 im Wesentlichen eine Grundfläche 23 als Kreisfläche auf, so dass die Aufbewahrungseinrichtung 20 als solche optimal in der Schüssel 13 gelagert werden kann. Die Schüssel weist ebenso eine Bodenfläche als Kreisfläche auf.

Das Tragemittel 24 in Form eines Griffs kann ebenfalls aus einem Textilmaterial oder einem anderen flexiblen material hergestellt werden, und ist diametral auf der Grundfläche der Aufbewahrungseinrichtung 20 angeordnet. Es ist jedoch denkbar, dass eine Vielzahl an Tragemittel 24 auf der Grundfläche 23 und/oder auf der Mantelfläche 26 der Aufbewahrungseinrichtung angeordnet sein können.

Fig. 4 ist die schematische Seitenansicht der Aufbewahrungseinrichtung korrespondierend zur Draufsicht der Fig. 3. Wie oben erwähnt weist die Aufbewahrungseinrichtung gemäß dieser Ausführungsform eine Zylinderform mit einer Mantelfläche 26 und einer Höhe 28 auf. Die Höhe 28 der Aufbewahrungseinrichtung 28 ist im Wesentlichen an die Schüsselhöhe 14 angepasst, so dass die Aufbewahrungseinrichtung 20 als solche komplett in die Verarbeitungsschüssel platziert bzw. gelagert werden kann.

Die Aufbewahrungseinrichtung 20 weist zwei Aufnahmeräume 21a und 21b für Verarbeitungswerkzeug 22 auf, die jeweils mit einem Reißverschluss 25 abschließbar sind. Durch das flexible Material der Aufbewahrungseinrichtung 20 kann diese leicht zusammengepresst werden, welches zu einem platzsparenden Lagern führen kann. So kann beispielsweise ein Benutzer die mit dem Tragemittel 24 versehen Fläche gegen die Grundfläche 23 drücken, so dass die Aufbewahrungseinrichtung 20 eine verringerte Höhe 28 aufweist. Das führt zu dem Vorteil, dass die Aufbewahrungseinrichtung 20 als solche auch in kleineren Verarbeitungsschüsseln 13, als ursprünglich geplant, gelagert werden kann. Die Mantelfläche 26 ist dergestalt ausgebildet, dass beim Zusammenpressen der Aufbewahrungseinrichtung 20 durch einen Benutzer Falten entstehen, die in Richtung des Inneren der Zylinderform verlaufen. Daher bleibt die die Außenkontur der Aufbewahrungseinrichtung 20 im zusammengepressten bzw. zusammengefalteten Zustand stets innerhalb des Randes 27 der Grundfläche 23, so dass diese weiterhin in der Verarbeitungsschüssel 13 platziert werden kann.

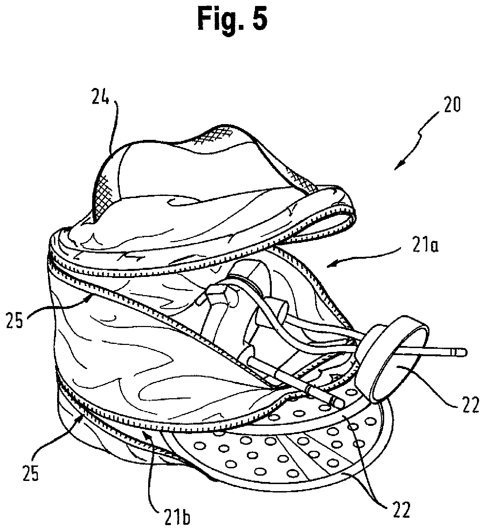

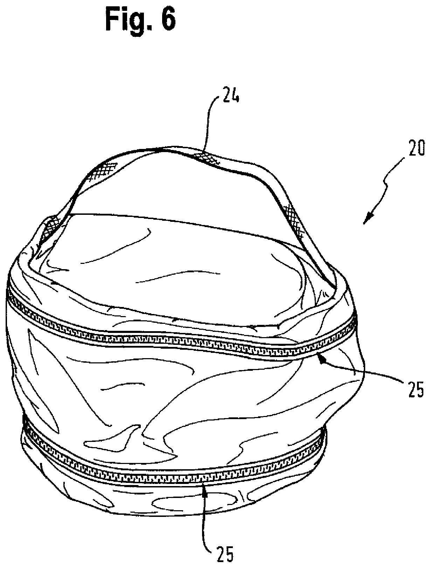

Fig. 5 zeigt die Aufbewahrungseinrichtung gemäß der vorliegenden Erfindung mit zwei Aufnahmeräumen 21a und 21b, in welchen unterschiedliche Werkzeuge bzw. Zubehör des Küchengeräts 22 aufbewahrt sind. Gemäß dieser Anordnung sind scheibenförmige Werkzeuge 22 im unteren Aufnahmeraum 21b und entsprechen nimmt der obere Aufnahmeraum 21a ein Schlagbesen und/oder Knetwerkzeug 22 auf. Fig. 6 zeigt die Aufbewahrungseinrichtung 20 aus Fig. 5 mit verschlossenen Reißverschlüssen 25.

Ein Küchengerät mit einer Aufbewahrungseinrichtung gemäß der vorliegenden Erfindung gewährleistet eine einfache und platzsparende Lagerung bzw. Aufbewahrung von Werkzeugen und/oder Zubehörteilen des Küchengeräts. Durch das verwendete flexible Material für die Aufbewahrungseinrichtung kann diese leicht und ebenso einfach gehandhabt werden. Ein weiterer Vorteil ist auch die vereinfachte und kostensparende Produktion der Aufbewahrungseinrichtung.

### BEZUGSZEICHENLISTE

- 10: Küchengerät insbesondere Küchemanschine
- 11: Ankoppelstellen
- 12: Bedienteil für den Schwenkarm
- 13: Verarbeitungsschüssel
- 14: Schüsselhöhe
- 15: Lagerstelle
- 16: Grundkörper
- 17: Schwenkarm
- 18: Standfüße
- 19: Schüsselrand
- 20: Aufbewahrungseinrichtung
- 21a, 21b: Aufnahmeräume für Werkzeug bzw. Zubehör
- 22: Werkzeuge
- 23: Grundfläche der Aufbewahrungseinrichtung
- 24: Tragemittel bzw. Handhabe
- 25: Reißverschluss
- 26: Mantelfläche
- 27: Rand
- 28: Höhe der Mantelfläche

## Patentansprüche

1. Elektromotorisches Küchengerät (10), insbesondere Küchenmaschine, mit wenigstens einer Ankoppelstelle (11) für eine Vielzahl an Werkzeugen (22) zum Verarbeiten von Nahrungsmitteln, wobei das Küchengerät (10) eine aus einem flexiblen Material hergestellte Aufbewahrungseinrichtung (20) für die Vielzahl an Werkzeugen (22) umfasst, wobei das flexible Material ein Textilmaterial ist, wobei das Küchengerät (10) eine Verarbeitungsschüssel (13) zur Aufnahme von zu verarbeitenden Nahrungsmitteln umfasst, wobei die Aufbewahrungseinrichtung (20) dergestalt ausgebildet ist, dass diese in der Verarbeitungsschüssel (13) lagerbar ist, **dadurch gekennzeichnet, dass** die Aufbewahrungseinrichtung (20) wenigstens einen verschließbaren Aufnahmeraum (21a, 21b) für Werkzeuge (22) aufweist und der wenigstens eine Aufnahmeraum (21) durch einen Reißverschluss (25) verschließbar ist.

2. Elektromotorisches Küchengerät (10) nach Anspruch 1, **dadurch gekennzeichnet, dass** die Aufbewahrungseinrichtung (20) zylinderförmig mit einer runden, insbesondere kreisrunden, Grundfläche (23) und einer Mantelfläche (26) ausgebildet ist.

3. Elektromotorisches Küchengerät (10) nach Anspruch 2, **dadurch gekennzeichnet, dass** eine Höhe (28) der Mantelfläche (26) kleiner oder gleich einer Schüsselhöhe (14) der Verarbeitungsschüssel (13) ist.

4. Elektromotorisches Küchengerät (10) nach Anspruch 3, **dadurch gekennzeichnet, dass** die Grundfläche (23) im Wesentlichen einer Bodenfläche der Verarbeitungsschüssel (13) entspricht.

5. Elektromotorisches Küchengerät (10) nach einem der vorhergehenden Ansprüche, **dadurch gekennzeichnet, dass** die Aufbewahrungseinrichtung (20) ein Tragemittel (24) aufweist.

## Claims

1. Electric motor-driven kitchen appliance (10), in particular a food processor, having at least one coupling point (11) for a plurality of tools (22) for processing foodstuffs, wherein the kitchen appliance (10) comprises a storage facility (20) made from a flexible material for the plurality of tools (22), wherein the flexible material is a textile material, wherein the kitchen appliance (10) comprises a processing bowl (13) for holding foodstuffs to be processed, wherein the storage facility (20) is configured so that it can be stored in the processing bowl (13), **characterised in that** the storage facility (20) has at least one closable compartment (21a, 21b) for tools (22) and the at least one compartment (21) can be closed by means of a zipper (25).

2. Electric motor-driven kitchen appliance (10) according to claim 1, **characterised in that** the storage facility (20) is configured as cylindrical with a round, in particular circular, base surface (23) and a lateral surface (26).

3. Electric motor-driven kitchen appliance (10) according to claim 2, **characterised in that** a height (28) of the lateral surface (26) is shorter than or equal to a bowl height (14) of the processing bowl (13).

4. Electric motor-driven kitchen appliance (10) according to claim 3, **characterised in that** the base surface (23) corresponds essentially to a bottom surface of the processing bowl (13).

5. Electric motor-driven kitchen appliance (10) according to one of the preceding claims, **characterised in that** the storage facility (20) has a carrying means (24).

## Revendications

1. Appareil de cuisine à moteur électrique (10), en particulier robot de cuisine, comprenant au moins un point d'accouplement (11) pour une pluralité d'outils (22) de traitement de denrées alimentaires, dans lequel l'appareil de cuisine (10) comprend un dispositif de rangement (20) fabriqué en un matériau flexible pour la pluralité des outils (22),
dans lequel le matériau flexible est un matériau textile,
dans lequel l'appareil de cuisine (10) comprend un récipient de traitement (13) pour recevoir des denrées alimentaires à traiter,
dans lequel le dispositif de rangement (20) est configuré de telle manière que celui-ci peut être logé dans le récipient de traitement (13),
**caractérisé en ce que** le dispositif de rangement (20) comprend au moins un espace de logement pouvant être fermé (21a, 21b) pour des outils (22) et que l'au moins un espace de logement (21) peut être fermé par une fermeture à glissière (25).

2. Appareil de cuisine à moteur électrique (10) selon la revendication 1, **caractérisé en ce que** le dispositif de rangement (20) est réalisé sous une forme cylindrique comprenant une surface de base (23) ronde, en particulier circulaire et une surface d'enveloppe (26).

3. Appareil de cuisine à moteur électrique (10) selon la revendication 2, **caractérisé en ce qu'**une hauteur (28) de la surface d'enveloppe (26) est inférieure ou égale à une hauteur de récipient (14) du récipient de traitement (13).

4. Appareil de cuisine à moteur électrique (10) selon la revendication 3, **caractérisé en ce que** la surface de base (23) correspond essentiellement à une surface inférieure du récipient de traitement (13).

5. Appareil de cuisine à moteur électrique (10) selon l'une des revendications précédentes, **caractérisé en ce que** le dispositif de rangement (20) comprend un moyen de support (24).
